Europäisches Patentamt

(19) European Patent Office

Office européen des brevets

(11) Publication number: **0 105 701**
**B1**

(12) **EUROPEAN PATENT SPECIFICATION**

(45) Date of publication of patent specification: 02.09.87

(21) Application number: 83305805.0

(22) Date of filing: 28.09.83

(51) Int. Cl.⁴: **C 03 B 17/00,** C 03 C 4/04,
C 03 C 4/06, C 03 B 32/00,
C 03 C 3/089, C 03 C 17/02

(54) **Drawing laminated polarizing glasses.**

(30) Priority: 29.09.82 US 427510
29.09.82 US 427732

(43) Date of publication of application:
18.04.84 Bulletin 84/16

(45) Publication of the grant of the patent:
02.09.87 Bulletin 87/36

(84) Designated Contracting States:
DE FR GB

(56) References cited:
US-A-3 653 863
US-A-4 304 584

(73) Proprietor: **Corning Glass Works**
**Houghton Park**
**Corning New York 14831 (US)**

(72) Inventor: **Borrelli, Nicholas Francis**
**935 W. Water Street**
**Elmira New York (US)**
Inventor: **Coppola, Frank**
**614 Gross Road**
**Horseheads New York (US)**
Inventor: **Morse, David Lathrop**
**River Road**
**Corning New York, N.Y. 14830 (US)**
Inventor: **Nolan, Daniel Aloysius**
**28 Skyline Drive**
**Corning New York (US)**
Inventor: **Seward, Thomas Philip, III**
**30 Brown Road**
**Corning New York (US)**
Inventor: **Lentz, William Paul**
**P.O. Box 469 Campbell**
**New York, N.Y. 14821 (US)**
Inventor: **Shay, George Clinton**
**R. D. No. 2 Welch Road**
**Corning New York (US)**

(74) Representative: **Boon, Graham Anthony et al**
**Elkington and Fife High Holborn House 52/54**
**High Holborn**
**London, WC1V 6SH (GB)**

Courier Press, Leamington Spa, England.

## Description

The invention relates to a method of making polarizing glasses from silver containing glasses of the types which are phase separable or photochromic through the presence of silver halide particles from the group of AgCl, AgBr, AgI.

Polarizing glasses have been prepared wherein very fine metallic particles and inorganic crystals have comprised the polarizing materials. Three methods for making polarizing glasses have been disclosed in the recent patent literature. U.S. Patents Nos. 4,125,404 and 4,125,405 describe the preparation of photochromic and non-photochromic polarizing glasses effected through the irradiation of silver-containing glasses with intense polarized light. Photochromic polarizing glasses are generally clear in the undarkened state and polarizing in the darkened state. U.S. Patent Nos. 3,653,863 and 4,282,022 disclose the manufacture of photochromic polarizing glasses via elongating, stretching or extruding the glass. U.S. Patent No. 4,304,584 describes the preparation of polarizing glasses by elongating glasses containing silver halide particles, then heat treating said glass in a reducing atmosphere.

The first method involves subjecting a glass, wherein a silver halide selected from the group of AgCl, AgBr, and AgI constitutes the polarizing agent, to a high intensity source of linearly-polarized visible light, such as a laser, while the glass is in the darkened or colored state. The practical aspects of providing such an exposure to the glass have rendered the process intrinsically expensive and slow. Furthermore, the polarizing effect produced in this manner deteriorates on exposure to sunlight and the reported dichroic ratios are relatively low, <4.

The second method is specifically directed to photochromic glasses wherein a silver halide comprises the photochromic agent. The technique contemplates stretching or extruding the photochromic glasses, while at temperatures between the annealing and softening points of the glass, to simultaneously elongate the silver halide particles to an ellipsoidal configuration (conventionally demonstrating a length-to-width ratio, termed the "aspect ratio", ranging between about 2:1—5:1 for stretching and 2:1—30:1 for extrusion) and align the elongated particles. The elongated glass is cooled quickly to inhibit the elongated particles from returning to their original shape (respheroidizing).

The stretching technique (3,653,863) is subject to several limitations. For example, the redrawing or stretching comprehends placing the glass under high tensile stress, and glass is known to be weak in tension. Consequently, although we have found that the stress necessary for good particle elongation is often at least about 20.7 to 41.4 MPa (3000—6000 psi), ruptures of the glass at much lower stress levels are not uncommon. A practical limit for rupture is considered to be about 6.9 MPa (1000 psi).

U.S. Patent No. 4,282,022 discloses a method of extruding silver-containing glasses wherein the metallic silver and/or silver halide particles within the glass are elongated and aligned in the direction of glass movement. In general, the silver and silver halide particles, prior to elongation, have diameters within the range of about (8 to 100 nm) 80—1000 Å. The patent points out that if the extrusion process is founded essentially solely upon the presence of compressive stresses, and glass is known to be extremely strong under compression, extrusion can be carried out at very high compressive stress levels. This factor eliminates the problem of premature rupture which is encountered when applying the necessary stretching tensile stresses during a redraw operation. Thus, superior polarizing characteristics theoretically can be obtained with an extrusion process, since extrusion permits the use of higher stress levels.

The extrusion is conducted at such elevated temperatures that the glass is at a viscosity of from $10^7$ to $10^{12}$ Pa · s ($10^8$—$10^{13}$ poises), i.e., at temperatures between about the annealing point and the softening point of the glass, and at such pressures that the cross-sectional area of the glass in the extrusion chamber is reduced by a factor of at least 4 and up to 80 or more in the extrudate. Under the influence of those temperatures and pressures the silver and/or silver halide particles will be elongated to assume an oblate or prolate geometry with aspect ratios of at least 2:1 and up to 30:1 and greater. The photochromic glasses are also generally clear in the undarkened state and polarizing in the darkened state, while the glasses containing silver metal are always polarizing.

However, various problems are encountered with the extrusion process including a tendency for the elongated particles to return to their original shape (respheroidize) as the glass flows from the extrusion chamber, unless necessary precautions are taken. In addition, the flow of a charge in an extrusion chamber is not uniform, since the center portion thereof tends to flow more rapidly than the portion closer to the chamber and orifice walls, due to the friction of such walls.

United States Patent No. 4,304,584 describes the production of glasses exhibiting polarizing properties, i.e., glasses displaying dichroic ratios up to 40 and higher, from two types of silver-containing glasses: (1) phase separable glasses; and (2) glasses demonstrating photochromic behavior because of the presence of particles of a silver halide selected from the group of AgCl, AgBr, and AgI. The method for preparing the polarizing glasses contemplates two fundamental steps: (a) elongating or stretching the base glass articles under stress via such methods as redrawing, extruding, rolling, or stretching at temperatures between the annealing point and softening point of the glasses to cause the glass phases in the phase separable glasses or the silver halide particles in the photochromic glasses to become elongated and aligned in the direction of the stress; and (b) heat treating the elongated glass articles in a reducing environment at a temperature below the annealing point of the glasses, but above about 300°C, to reduce at least a portion of the silver ions in the glass to metallic silver which is deposited in at least one of the elongated glass phases and/or along the phase boundaries of the elongated glass phases and/or deposited upon the elongated silver halide particles. The most efficient heat treatment is stated to comprise a temperature between about 375°—450°C in a hydrogen atmosphere. Polarization was discerned in the visible and near infrared portions of the radiation spectrum. When photochromic glasses are made polarizing in this manner the non-reduced particles in the bulk of the glass retain their photochromic properties.

In the case of phase separable, non-photochromic glasses, the operable compositions are asserted to reside in the alkali metal aluminoborosilicate field. Thus, suitable glasses will commonly consist essentially, in weight percent, of about 5—12% alkali metal oxide, 20—35% $B_2O_3$, 1—15% $Al_2O_3$, and the remainder $SiO_2$, but with the proviso that, where $Al_2O_3$ is included in amounts in excess of 5%, a specific phase separation agent such as CdO and/or F must be present at a level of at least 1%.

The base composition of an operable photochromic glass is noted as being essentially immaterial so long as AgCl and/or AgBr and/or AgI constitute the photochromic agents, although large amounts, viz., >10% by weight total, of PbO and/or other readily-reducible metal oxides will be avoided.

The patent also discloses the production of composite bodies formed via concurrent extrusion of different glass compositions, that practice being operable with both phase separable glasses and photochromic glasses. In general, the composite body will consist of a thin surface layer or skin enveloping a thicker interior portion or core.

Thus, with respect to silver halide-containing photochromic glasses, it had been recognized in the art that the subjection of such glasses to high temperatures led to the growth of relatively large silver halide particles, the dimensions of the particles becoming so large as to cause light scattering with the consequent development of a hazy appearance. It was found, however, that the larger particles required less mechanical stress to effect elongation thereof and resisted the tendency to respheroidize to a much greater extent. Accordingly, it was deemed useful to form a laminated article comprising a thin skin glass which has been subjected to a relatively high heat treatment to generate large silver halide crystals therein and an interior portion that has been subjected to a less severe heat treatment to produce a transparent photochromic glass. Subsequent elongation of the composite body results in a thin skin exhibiting high polarization and a transparent core displaying good photochromic behavior. And, because the cross section of the skin glass is very thin, any haze developed therein will customarily have very little effect upon the optical transmission of the composite.

As can be appreciated, inasmuch as the polarization derived from the heat treatment conducted under reducing condition is normally limited to a thin surface layer, typically 10—100 microns, the phase separable or photochromic glass need only comprise the surface layer of the composite, if so desired. Hence, the use of composite articles lends even wider versatility to the process. For example, only the skin layer is required to be elongated uniformly; the size, shape, and alignment of the particles in the core glass have little effect upon the polarization character of the final product. Furthermore, the production of laminated articles is economically attractive inasmuch as only the thin surface layer need include the relatively expensive silver-containing materials.

That patented procedure was shown to produce excellent polarization in the visible portion of the radiation spectrum with values therefor being reported at 550 nm and 600 nm, those wavelengths lying near the center of the visible region of the spectrum. For certain applications, however, it would be desirable to have glasses that exhibit good polarizing character in the infrared area of the spectrum, i.e., at wavelengths longer than 700 nm. The currently-available sheet-type and wire grid polarizers often display poor performances over the wavelengths between 700 nm—3000 nm because of their poor polarizing properties and/or poor chemical, mechanical, or thermal durability.

It is apparent that the patent was concerned with the utilization of relatively large silver halide particles within a thin skin glass of a composite body, since the large particles required less mechanical stress to effect the elongation thereof and further, since such particles resisted the tendency to respheroidize. However, we have observed that higher dichroic ratios of greater than 15:1 and even exceeding 60:1, representing increased polarization, are obtainable by elongating relatively small silver particles having a diameter of less than about 50 nm (500Å). Further, we have learned that it is necessary to utilize particles having a diameter of less than about 50 nm (500Å) and preferably less than 20 nm (200Å) in order to eliminate the effects of light scattering, which is produced by larger particles, and which cannot be tolerated in many optical and ophthalmic applications.

We have further learned that if the particles are in the form of silver halide, haze levels suitable for optical and ophthalmic applications can be achieved if the particle sizes are less than 20 nm (200Å) in diameter. Also, dichroic ratios in excess of 40 can be achieved when silver halide particles less than 60 nm (600Å) diameter are elongated and reduced to silver metal by heat treatment in a reducing atmosphere.

An object of the instant invention is to produce glasses demonstrating excellent polarizing properties over the infrared portion of the radiation spectrum, most preferably the region of 700—3000 nm. Polarizing properties up to the long wavelength transmission cutoff of the base glass, i.e., in the region of 3—5 microns, are, however, within the scope of the invention.

According to the present invention there is provided a method of making polarizing glasses from silver containing glasses of the types which are phase separable or photochromic through the presence of silver halide particles from the group of AgCl, AgBr, AgI, by elongating the glasses under stress at temperatures above the annealing point and aligning the glass phases or particles, respectively, in the direction of stress,

3

and heat treating the elongated glasses in a reducing environment, in which method, to provide polarizing properties within the infrared region of the radiation spectrum, the glass is subjected prior to elongation to a temperature at least above the strain point, but not in excess of about 50°C above the softening point of the glass, for a sufficient length of time to cause the generation of silver halide particles therein selected from the group of AgCl, AgBr and AgI ranging in size from 20—500 nm (200 to 5000Å) the elongation under stress is done at a temperature above the annealing point, but below that where said glass exhibits a viscosity of $10^8$ poises, such that said silver halide particles are elongated to an aspect ratio of at least 5:1 and the heat treatment in reducing environment is done at a temperature above 250°C, but no higher than 25°C above the annealing point of the glass, for a sufficient length of time to reduce at least a portion of said silver halide particles to particles which contain elemental silver and which have an aspect ratio of at least 2:1.

One problem, however, encountered with the utilization of such small particles is the fact that higher stresses, often greater than 69 MPa (10,000 psi), are required to elongate such particles to a degree necessary to provide the desired high dichroic ratio, which may be on the order of 40 or greater. In contrast, normal redraw operations may be performed under stresses of less than 6.9 MPa (1000 psi), and when the stress is increased to about 10.3 MPa (1500 psi) the glass has a tendency to rupture or break during the redraw process.

It thus has been an object of a preferred embodiment of the present invention to provide an improved method of drawing or redrawing glass having silver halide particles of less than about 50 nm (500Å), with tensile stresses of greater than 13.8 MPa (2000 psi) so as to elongate said silver or silver halide particles without rupturing or breaking the glass draw.

In view of the fact that breakage or rupture of the draw is usually the result of a concentration of tensile stresses adjacent to a surface flaw, the potentially polarizing glass is therefore preferably coated with a glass of substantially lower viscosity so that during the elongation process, very little tensile stress will exist at the surface of the draw, thereby virtually eliminating such breakage.

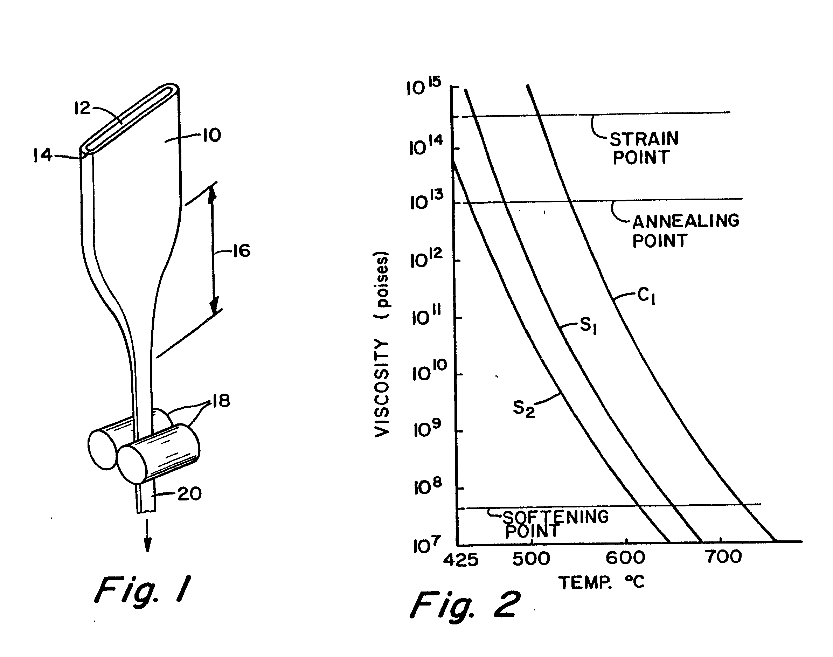

Referring now to the drawings, and particularly Figure 1, a schematic illustration of a glass drawing process embodying the present invention is shown. Although the drawing process is shown with respect to a redraw blank, the drawing and stretching of the laminated polarizing glasses is equally applicable to the drawing of molten laminated polarizing glasses emanating from a composite glass feeder such as disclosed in U.S. Patent No. 3,582,306 or laminated sheet glass formers disclosed in U.S. Patents Nos. 4,204,027 and 4,214,886. The redraw blank 10 is shown comprising a potentially polarizing core glass 12 and a skin glass 14. The blank 10 passes through a hot zone of a redraw furnace represented by arrow 16, wherein the blank is heated and stretched under tension by pulling rolls 18 into a laminated polarizing glass sheet or strip 20.

During the drawing process, the skin glass temperature is generally maintained near or above its softening point temperature until the glass is contacted by the pulling rolls 18, to thus ensure that very little tensile stress exists in the skin layer. The core glass, which is subjected to high tensile stress during the drawing process, so as to elongate the silver-containing particles to a desired aspect ratio of 5:1 or greater, is maintained at a temperature above its annealing point temperature. However, the high tensile stresses in the core glass are not permitted to be transmitted to the traditionally weak glass-air interface, due to the presence of the low viscosity skin glass, except for the very short period of time that the glass surface is in contact with the pulling rolls. The stress of stretching no longer exists within the strip 20 below the pulling rolls 18, and accordingly the low viscosity skin glass may then harden.

When working with redraw blanks, an additional benefit is obtained through the use of a low viscosity skin glass. That is, as previously mentioned, most glass breakage during drawing is the result of high tensile stresses about surface flaws, however as the skin glass passes through the hot zone of a redraw furnace, or is delivered in a molten state in a downdrawn, the skin glass is sufficiently fluid so as to heal over any core glass surface flaws which may be present from the fabrication or handling of a redraw blank or due to imperfections in a discharge orifice. If it is desired to produce a strengthened polarizing glass, the softer skin glass may be made of a lower expansion than that of the core glass. Further, if the finish of the laminated sheet is important, the skin glass could be hardened above the pulling rolls so that its surface would not be marked by the rolls, and if a lower expansion skin glass were used any tensile stress at the surface would be at least partially counteracted by the compression stress arising from the difference in the expansion coefficients between the skin and the core glasses.

The thickness of the low viscosity skin glass may be varied to provide various desired properties. From the point of view of reducing surface stress at the pulling rolls, the ratio of core thickness to total laminated thickness, B, should be small, preferably less than 1:10 or

$$B = \frac{t_c}{t_1} < 1:10$$

where B is the ratio of the core thickness to the total laminated thickness, $t_c$ is the thickness of the core, and $t_1$ is the total laminate thickness. When B is a relatively low value, a close thermal expansion match between the core and skin glass is required to maintain low residual tensile stress in the core glass, which is

4

necessary to avoid spontaneous breakage in the final product during use. On the other hand, at relatively high B values, larger thermal expansion mismatches may be tolerated and in fact can be used to provide surface compressive stress for strengthening the product.

To illustrate how the laminated article materially reduces the overall tensile stress in the article during stretching while still maintaining relatively high tensile stress in the core for elongating the silver-containing particles, one can envision a polarizing sheeting having a 0.05 mm (0.002″) thick silver containing core glass and skin glasses have a thickness of 0.25 mm (0.010″) each, thus giving an overall sheet thickness of 0.55 mm (0.022″). If the laminated ribbon were 25 mm (1″) wide and the stress necessary for particle elongation were 27.6 MPa (4000 psi), then the force necessary to stretch only the core would be $0.05 \times 10^{-3} \times 25 \times 10^{-3} \times 27.6 \times 10^{6}$ which equals 34.5 N (8 lbs). Accordingly, if the skin glass viscosity is 1000 times less than the core glass, the force to stretch the two skin layers would only be:

$$34.5 \times \frac{0.5}{0.05} \times \frac{1}{1000} = 0.345 \text{ N}$$

If the skin glass were hardened before passing through the pulling rolls, the tensile stress in the hardened glass ribbon at that point would be:

$$\frac{34.845}{0.55 \times 10^{-3} \times 25 \times 10^{-3}} = 2.53 \times 10^{6} \text{ Pa} = 2.53 \text{ MPa}$$

Therefore, utilizing the concept of the present invention, a stress of 27.6 MPa (4000 psi) is produced in the polarizing glass while producing only a 2.5 MPa (367 psi) stress at potential breakage sites at the surface of the low viscosity skin glass. Perhaps almost as importantly, however, the process is capable of producing excellent polarizing sheet using very low pulling forces at the pulling rolls. For example, under the above described conditions of core and skin glass thickness and relative viscosities, a 1.5 m (60″) wide polarizing sheet could be drawn with a pulling force of $60 \times 34.845$ or only 2.09 kN (485 lbs), compared to 23.5 kN (5,280 lbs) if the core glass occupied the entire sheet thickness. Thus, it is entirely feasible that such forces could be used in producing laminated polarizing sheet glass from molten downdraw and overflow sheet forming apparatus in a continuous process.

Figure 2 illustrates viscosity curves of two skin glasses $S_1$ and $S_2$ that could be used with a core glass $C_1$ which contains silver particles. The skin glass $S_2$ has almost the same coefficient of thermal expansion as the silver particle-containing core glass $C_1$, but is softer by a factor of about 1000 at its own softening temperature. The skin glass $S_1$ would provide strengthening to the core glass $C_1$ since its coefficient of thermal expansion is about 30% less than that of the core glass $C_1$. The viscosity of the low viscosity skin glass at the softening point temperature of the core glass should be at least 50% less than that of the core glass so that the tensile stresses during drawing and elongation of the laminated glass will be minimal in the skin glass while sufficiently large in the core glass so as to elongate the silver containing particles to an aspect ratio of at least 2:1 and preferably greater. Preferably, from the point of view of concentrating the particle elongation load in the core glass and minimizing glass surface stress during redraw, it is desirable that the skin to body viscosity ratio measured at the softening point of the body glass be equal to or less than $10^{-2}$. That is:

$$\frac{n_s}{n_b} \leq 10^{-2}$$

wherein $n_s$ is the viscosity of the skin glass and $n_b$ is the viscosity of the body or core glass. The required ratio will depend on both the redraw stress required and the surface stress that can be tolerated.

Virtually any glass containing silver metal particles may be made polarizing if it is stretched at a temperature near its softening point (i.e., $n = 10^{-8}$ to $10^{-11}$ Pa · s ($10^{-7}$ to $10^{-10}$ poises)) with sufficient tensile stress to elongate the particles. Also, most photochromic glasses containing silver halide can be made polarizing in either their photolytically darkened or hydrogen reduced states by similar processing. As previously mentioned, higher dichroic ratios are obtained when the silver particles are relatively small with a diameter of 50 nm 500Å or less. However, the elongation of such particles requires the stretching of a glass under stresses exceeding 17.2 MPa (2500 psi), and often greater than 69 MPa (10,000 psi), and thus the laminated glass of the present invention facilitates the application of such stresses without breakage of the glass during drawing. The dichroic ratio DR is defined in the following formula:

$$DR = \frac{\text{Log } (1/T_{\parallel})}{\text{Log } (1/T_{\perp})}$$

wherein DR is the dichroic ratio, $T_{\parallel}$ is the transmission of the glass for linearly polarized light with its

5

## 0 105 701

electric vector oriented parallel to the glass stretch axis and $T_\perp$ is the transmission of the glass with a perpendicular orientation. Utilizing relatively small silver particles and elongating the same with the present invention to an aspect ratio of 2:1 or greater, dichroic ratios at the absorption peak exceeding 60 are possible.

As previously mentioned, in a preferred embodiment of the invention a means is provided for protecting the surface of the polarizing glass while it is being stretched, by encasing or cladding the potentially polarizing core glass with a much softer skin glass.

Although virtually any softer skin glass would provide the desired beneficial results in accordance with this aspect of the invention with any core glass having silver-containing particles, preferably the coefficient of expansion of the skin and core glasses are matched to prevent the development of residual stress when the polarizing glass is cooled to room temperature. However, a compressive stress in the cladding may be utilized to provide some strength benefit in certain product applications. The following table sets forth illustrations of specific core and skin glasses which may be utilized.

TABLE I

| Wt. % | Polarizing core glass | | Polarizing core glass | |
|---|---|---|---|---|
| | $C_1$ | $S_1$ | $C_2$ | $S_2$ |
| $SiO_2$ | 72.5 | 58.6 | 72.0 | 55.8 |
| $B_2O_3$ | 0 | 17.5 | 0 | 0 |
| $Al_2O_3$ | 2.0 | 11.5 | 2.0 | 2.0 |
| $Li_2O$ | 0 | 2.0 | 0 | 0 |
| $Na_2O$ | 15.5 | 6.7 | 18.0 | 10.8 |
| $K_2O$ | 0 | 1.5 | 0 | 0 |
| $CaO$ | 10 | 0 | 8.0 | 0 |
| $PbO$ | 0 | 2.2 | 0 | 31.4 |
| $SnO$ | 0.2 | 0 | 0.2 | 0 |
| $Ag$ | 0.025 | 0 | 0.025 | 0 |
| $Cl$ | 0 | 0 | 0 | 0 |
| $Br$ | 0 | 0 | 0 | 0 |
| $CuO$ | 0 | 0 | 0 | 0 |
| $F$ | 0 | 0 | 0 | 0 |
| $CdO$ | 0 | 0 | 0 | 0 |
| Soft. Pt. (°C) | 720 | 648 | 688 | 614 |
| Anneal Pt. (°C) | 551 | 482 | 525 | 445 |
| Strain Pt. (°C) | 514 | 447 | 483 | 408 |
| Exp. (0—300°C) $\times 10^{-7}$/°C | 91.6 | 64.0 | 97.6 | 89.0 |
| Density (gm/cm$^3$) | 2.50 | 2.37 | 2.49 | 3.12 |

6

# 0 105 701

TABLE I (continued)

| Wt. % | Photochromic polarizing core glass | | Polarizing core, photochromic skin | |
|---|---|---|---|---|
| | $C_3$ | $S_3$ | $C_4$ | $S_4$ |
| $SiO_2$ | 58.6 | 51.7 | 58.6 | 51.7 |
| $B_2O_3$ | 18.3 | 31.0 | 18.3 | 31.0 |
| $Al_2O_3$ | 9.5 | 7.8 | 9.5 | 7.8 |
| $Li_2O$ | 1.9 | 0 | 1.9 | 0 |
| $Na_2O$ | 1.7 | 9.5 | 1.7 | 9.5 |
| $K_2O$ | 9.8 | 0 | 9.8 | 0 |
| CaO | 0 | 0 | 0 | 0 |
| PbO | 0.12 | 0 | 0 | 0 |
| SnO | 0 | 0 | 0.2 | 0 |
| Ag | 0.32 | 0 | 0.025 | 0.09 |
| Cl | 0.30 | 0 | 0 | 0.26 |
| Br | 0.15 | 0 | 0 | 0.60 |
| CuO | 0.016 | 0 | 0 | 0.03 |
| F | 0 | 1.2 | 0 | 1.2 |
| CdO | 0 | 0 | 0 | 0.9 |
| Soft. Pt. (°C) | 665 | 624 | 665 | 624 |
| Anneal Pt. (°C) | 500 | 435 | 500 | 435 |
| Strain Pt. (°C) | 467 | 399 | 467 | 399 |
| Exp. $(0—300°C) \times 10^{-7}/°C$ | 66.9 | 62.6 | 66.9 | 62.6 |
| Density $(gm/cm^3)$ | 2.34 | 2.22 | 2.34 | 2.22 |

Although not limiting in nature, the following specific example sets forth one embodiment of the present invention. A core glass having a composition as set forth as $C_2$ in the above table was provided with a skin glass of a composition set forth as $S_2$ in said table, to form a redraw blank. The blank was comprised of a core having a thickness of 2.84 mm (0.112") and a width of about 63 mm ($2\frac{1}{2}$") surrounded by the skin glass having a thickness of 3.175 mm (0.125"). The redraw blank was heated to the softening point temperature of the core glass which produced a viscosity of $5 \times 10^6$ Pa · s ($5 \times 10^7$ Poise) whereas the skin glass had a viscosity at such temperature of $3 \times 10^5$ Pa · s ($3 \times 10^6$ Poise) which is 16.7 times less than that of the core glass. The core was subjected to a pulling load and drawn down into a laminated polarizing glass strip at a tensile stress of about 66.2 MPa (9,600 psi). The silver-containing particles were initially about 38 nm (380Å) in diameter and were elongated to an aspect ratio of 2.9:1, and the resulting product produced a polarizing glass having a dichroic ratio of 37 (measured at 630 nm).

Electron microscopy and X-ray diffraction analysis have demonstrated that silver halide particles are reduced to silver metal when a glass containing such particles is subjected to a heat treatment in a reducing atmosphere. However, the silver metal occupies a smaller volume than the precursor silver halide particle and exhibits a lower aspect ratio. Therefore, the aspect ratio of the silver halide particles must be greater

7

than twice and, preferably, at least thrice that desired in the silver metal particles to achieve the sought for polarization.

Fundamentally, the means for accomplishing the above-cited principal objective contemplates four general steps:

(1) a batch for a glass containing silver and at least one halide selected from the group of chloride, bromide, an iodide is melted and the melt shaped into a glass body of a desired configuration;

(2) the glass body is subjected to a defined heat treatment to cause the generation of silver halide particles therein of a desired size;

(3) the glass body is elongated under stress within a defined temperature range to elongate said silver halide particles and to align them in the direction of the stress; and

(4) the elongated glass body is exposed to a reducing environment within a defined temperature range to reduce at least a portion of the silver halide particles to elemental or metallic silver which is deposited in and/or upon said elongated particles.

The observance of the heat treating parameters of each of Steps (2), (3), and (4) is vital to achieving the desired properties in the final product. To illustrate, the generation of silver halide particles in the glass body required temperatures above the strain point, preferably above the annealing point, and, where physical support is provided for the glass body as, for example, confinement in a mold, temperatures 50°C in excess of the softening point of the glass can be utilized. Temperatures above the annealing point are economically desirable since, as is well-recognized in the art, particle growth occurs more rapidly as the temperature is raised, provided the maximum solubility temperature of the particles is not exceeded.

The elongation of the glass body (and the silver halide particles previously generated therein) will be conducted at temperatures above the annealing point but below the softening point of the glass, i.e., at temperatures where the glass exhibits a viscosity greater than $10^7$ Pa $\cdot$ s ($10^8$ poises). In general, the elongation will be carried out at temperatures at least 50°C below the softening point, to allow high stresses to be developed and to prevent respheroidization of the particles. Laboratory experimentation has demonstrated that silver halide particles can be elongated at lower stresses than silver metal particles and yet will provide excellent polarization properties after reduction to elemental or metallic silver. Although not unequivocally proven, the reason for this behavior of silver halide particles *vis-a-vis* silver particles is believed to be twofold: first, because the glass-silver halide particle interface has a lower surface tension than the glass-silver metal interface; and, second, because the silver halide entity is larger than the corresponding amount of elemental silver and, hence, exhibits less surface curvature and, therefore, less surface tension generated pressure, with the necessary consequence that it stretches more easily. Evidence supporting that reasoning is found in the fact that elongated metallic silver particles are subject to respheroidization at temperatures about the strain point of a glass, whereas elongated silver halide particles resist respheroidization to higher temperatures.

Nevertheless, firing of the elongated body in a reducing environment will be carried out at temperatures above about 250°C but no higher than 25°C above the annealing point and, preferably, somewhat below the annealing point of the glass to again preclude any tendency of the particles to respheroidize. Thus, to repeat, the elongated configuration of the silver and silver halide particles is quite unstable and even the slightest relaxation in the residual glass matrix will permit the particles to move toward their stable state. Glass relaxation is essentially absent at temperatures below the strain point thereof. The particle elongation can be deemed permanent at such low temperatures.

In a similar manner to the disclosure of Patent No. 4,304,584, the process parameters of the instant invention are applicable with any glass which is characterized as containing silver halide particles therein selected from the group of AgCl, AgBr, and AgI, whether or not the glass evidences photochromic behavior. Patent No. 4,304,584 refers to United States Patent No. 3,208,860, the basic patent in the field of photochromic glass. That patent broadly discloses silicate-based glass compositions which display photochromic behavior because of the presence of silver halide crystals therein selected from the group of AgCl, AgBr, and AgI. The preferred glass compositions cited in the patent consisted essentially, expressed in terms of weight percent on the oxide basis, of 40—76% $SiO_2$, 4—26% $Al_2O_3$, 4—26% $B_2O_3$, and at least one alkali metal oxide selected from the group of 2—8% $Li_2O$, 4—15% $Na_2O$, 6—20% $K_2O$, 8—25% $Rb_2O$, and 10—30% $Cs_2O$, at least one halogen in the indicated minimum proportion of 0.2% Cl, 0.1% Br, and 0.08% I, and a minimum of Ag in the indicated proportion of 0.2% where the halogen is Cl, 0.05% in a glass containing at least 0.1% Br, and 0.03% in a glass containing at least 0.08% I, the sum of the base glass components, silver, and halogen constituting at least 85% of the total glass. Besides the above-recited required components, the patent discloses the optional inclusion of fluorine, bivalent metal oxides such as CaO, SrO, MgO, BaO, and ZnO, and $P_2O_5$. The present inventive process is operable with such glass compositions, provided that substantial amounts of readily reducible metal oxides such as PbO and $Bi_2O_3$ are not present therein. Where the inventive products are destined for use in ophthalmic applications, i.e., there is a desired for a glass demonstrating rapid fading capability and relative independence to changes in temperature, the preferred photochromic glasses are those described in United States Patent No. 4,190,451 which consist essentially, expressed in terms of weight percent on the oxide basis, of 8—20% $R_2O$, wherein $R_2O$ consists of 0—2.5% $Li_2O$, 0—9% $Na_2O$, 0—17% $K_2O$, and 0—6% $Cs_2O$, 14—23% $B_2O_3$, 5—25% $Al_2O_3$, 0—25% $P_2O_5$, 20—65% $SiO_2$, 0.004—0.02% CuO, 0.15—0.3% Ag, 0.1—0.25% Cl, and 0.1—0.2% Br, the molar ratio $R_2O:B_2O_3$ ranging between about 0.55—0.85, where the composition is essentially free from

8

divalent metal oxides other than CuO, and the weight ratio Ag:(Cl+Br) ranging about 0.65—0.95. Self-evidently, however, there are applications for photochromic glasses other than in the ophthalmic field where slower fading, and/or deeper darkening, and/or strong temperature dependence can be tolerated or which may actually be desirable. Such glasses are also included in the present inventive process. Furthermore, where, as here, polarization in the infrared portion of the radiation spectrum, rather than the visible region, is of prime importance, the development of haze in the visible region of the spectrum is of no moment. Accordingly, where ophthalmic properties are not demanded, a preferred range of glasses will include those described in Patent No. 4,190,451, supra, but wherein the $R_2O$ content varies about 6—20%.

As is well known to the art, the actinic radiation promoting photochromic behavior in silver halide-containing glasses lies in the ultraviolet region of the spectrum. It has been found that the dichroic ratio and, hence, the polarization performance are somewhat decreased when a polarizing photochromic glass darkens in the presence of ultraviolet radiation. In the above-described preferred range of photochromic glass compositions, copper performs as a sensitizing agent; i.e., the glass will contain silver halide crystals but will display essentially no photochromic character in the absence of copper or with very high levels of copper, i.e., in excess of 2% by weight copper. Accordingly, where photochromism is not desired, copper will generally be omitted from the glass composition or utilized only at a very low level, since excessive amounts of copper disadvantageously color the glass. Nonetheless, when copper is entirely absent from the composition, care must be exercised during melting of the batch ingredients to avoid reduction of the silver ions to metallic silver. Thus, for example, alkali metal oxides may be added to the batch as nitrates or other techniques well known to the glass technologist may be used to maintain oxidizing conditions. Also, as a general rule, easily-reducible metal oxides such as PbO and $Bi_2O_3$ will be avoided to preclude their possible reduction along with the silver ions during the heat treatment in the reducing environment. This situation would lead to a broadening of the silver peak and a decrease in dichroic ratio. One especially desirable glass of the former type has the following composition, expressed in terms of parts by weight on the oxide basis:

| | |
|---|---|
| $SiO_2$ | 57.9 |
| $B_2O_3$ | 18.9 |
| $Al_2O_3$ | 6.27 |
| $Na_2O$ | 4.13 |
| $Li_2O$ | 1.84 |
| $K_2O$ | . 5.79 |
| $ZrO_2$ | 5.05 |
| Ag | 0.25 |
| Cl | 0.226 |
| Br | 0.14 |

Inasmuch as the sum of the above components closely approximates 100, for all practical purposes the individual values may be considered to reflect weight percent.

It was observed in Patent No. 4,190,451 that maintaining the molar ratio $(R_2O—Al_2O_3):B_2O_3$ at a low level causes the glass to exhibit little photochromic darkening. Accordingly, another composition regime wherein silver halide crystals can be developed, but the glass will not demonstrate significant photochromism even when copper is present, lies in the region of glasses wherein the molar ratio $(R_2O—Al_2O_3):B_2O_3<0.25$, although the addition of at least 0.01% by weight CdO may promote photochromism.

Yet another area of compositions containing silver halide crystals, but which will not display significant photochromic behavior even when copper is included, involves glasses having base compositions with greater than 26% by weight $B_2O_3$. In general, such base glasses will consist essentially, expressed in terms of weight percent on the oxide basis, of about 5—12% alkali metal oxides, 1—15% $Al_2O_3$, 27—35% $B_2O_3$, and the remainder $SiO_2$, and wherein the molar ratio $(R_2O—Al_2O_3):B_2O_3$ is most preferably less than 0.25. Again, the addition of CdO in an amount of at least 0.01% may cause the development of photochromism. A particularly desirable example of such a glass has the composition recited below, literally expressed in terms of parts by weight on the oxide basis, but which may, for all practical purposes, be deemed to be stated in terms of weight percent:

| | |
|---|---|
| $SiO_2$ | 51.8 |
| $B_2O_3$ | 31.0 |
| $Al_2O_3$ | 7.8 |
| $Na_2O$ | 9.8 |
| Ag | 0.18 |
| Cl | 0.52 |
| Br | 1.2 |
| F | 1.2 |
| CuO | 0.03 |

Experience has indicated that the silver halide particles developed during the initial heat treatment (prior to elongation) should exhibit diameters of at least about 20 nm (200Å) in order to assume, upon elongation, aspect ratios of at least 5:1 such that, upon reduction to elemental silver particles, those latter particles will display aspect ratios greater than 2:1 to insure the placement of the long wavelength peak at least near the edge of the infrared portion of the radiation spectrum, while avoiding serious breakage problems during the elongation process. Conversely, the diameters of the initial particles ought not to exceed about 500 nm (5000Å), lest the body exhibit considerable translucency and a decreased dichroic ratio due to radiation scattering effects.

The following table records a number of glass compositions, expressed in terms of parts by weight on the oxide basis, to illustrate the inventive method. Because the total of the individual constituents closely approximates 100, for all practical purposes the tabulated values can be deemed to reflect weight percent. Inasmuch as it is not known with which cation(s) the halogens are combined, they are simply reported as halides, in accordance with conventional glass analysis practice. Finally, because the quantities of silver employed are so small, they are merely listed as Ag.

The actual batch ingredients may comprise any materials, either the oxides or other compounds, which, when melted in combination with the other components, will be converted into the desired oxide in the proper proportions. The batch components were compounded, ballmilled together to assist in obtaining a homogeneous melt, and either charged into platinum crucibles or into a small laboratory continuous melting unit. The batches were melted at about 1300°—1450°C, the melts cast as bars having dimensions of about 63 mm (2.5″)×6.3 mm (0.25″)×4.57 mm (18″), drawn as sheet having a width of about 20 mm (8″) and a thickness of about 9.5 mm (0.375″), or cast as cylindrical bars with a diameter of about 63 mm (2.5″) and a length of 254 mm (10″), and those bodies annealed at about 450°C. Table II also reports the photochromic behavior (PC) of the compositions.

TABLE II

| | 1 | 2 | 3 | 4 | 5 | 6 |
|---|---|---|---|---|---|---|
| $SiO_2$ | 51.8 | 51.8 | 58.6 | 57.9 | 57.9 | 55.8 |
| $B_2O_3$ | 31.0 | 31.0 | 18.3 | 18.9 | 18.9 | 18.0 |
| $Al_2O_3$ | 7.8 | 7.8 | 9.5 | 6.27 | 6.27 | 6.48 |
| $Na_2O$ | 9.8 | 9.8 | 1.7 | 4.13 | 4.13 | 4.04 |
| $K_2O$ | — | — | 9.8 | 5.79 | 5.79 | 5.76 |
| $Li_2O$ | — | — | 1.9 | 1.84 | 1.84 | 1.88 |
| Ag | 0.18 | 0.18 | 0.32 | 0.25 | 0.25 | 0.24 |
| Cl | 0.52 | 0.52 | 0.30 | 0.226 | 0.226 | 0.20 |
| Br | 0.60 | 1.2 | 0.15 | 0.14 | 0.14 | 0.13 |
| F | 1.26 | 1.2 | — | — | — | — |
| CuO | 0.03 | 0.03 | 0.016 | — | 0.012 | 0.011 |
| CdO | 0.09 | — | — | — | — | — |
| PbO | — | — | 0.12 | — | — | — |
| $ZrO_2$ | — | — | — | 5.05 | 5.05 | 4.89 |
| PC | Yes | No | Yes | No | Yes | Yes |

Table III recites the heat treatment times and temperatures utilized to develop silver halide particles in several of the glasses of Table I and the average diameter of the particles generated, as measured via electron microscopy. Table III also records the elongation process applied to specimens of each glass via redrawing, including the temperature of redrawing, the stress applied and the average aspect ratio demonstrated by the elongated particles, again as determined via electron microscopy.

The reducing treatment was carried out on ground and polished specimens cut from the elongated bars and sheets in a laboratory furnace fitted with a stainless steel tube through which an appropriate gas

**0 105 701**

can be passed. Because of the well-recognized inherent superiority of hydrogen as a reducing environment, it was utilized in the described studies. Nonetheless, it will be appreciated that other well-known reducing atmospheres such as cracked ammonia, combinations of CO and $CO_2$, and mixtures of hydrogen with other gases, for example, forming gas, will similarly be effective, although customarily requiring a longer exposure period than with hydrogen gas to secure the same effect. In general, the elongated articles will be exposed to the reducing atmosphere for a sufficient period of time to develop a reduced surface layer having a thickness of at least 10 microns and, preferably, about 50 microns (~0.002"). Table III also lists the time and temperature of the reduction treatment to which the elongated samples were subjected.

### TABLE III

| Example | Heat treatment | Particle size (nm) | Elongation conditions |
|---|---|---|---|
| 3 | 720°C for 20 min. | 62.0 | 555°—565°C—31.7 MPa (4600 psi) |
| 3 | 720°C for 6 hours | 95.3 | 555°—565°C—11.7 MPa (1700 psi) |
| 6 | 720°C for 3 hours | *NM | 570°—590°C—30.3 MPa (4400 psi) |
| 6 | 720°C for 3 hours | NM | 570°—590°C—33.1 MPa (4800 psi) |
| 6 | 720°C for 2 hours | NM | 570°—590°C—18.6 MPa (2700 psi) |
| 6 | 720°C for 4 hours | NM | 570°—590°C—20.0 MPa (2900 psi) |
| 2 | 675°C for 4 hours | NM | 550°—570°C—15.2 MPa (2200 psi) |

### TABLE III -Continued-

| Example | Aspect ratio | Reduction treatment |
|---|---|---|
| 3 | 10.7 | 430°C for 3 hours |
| 3 | 7.5 | 430°C for 3 hours |
| 6 | NM | 430°C for 2 hours |
| 6 | NM | 430°C for 2 hours |
| 6 | NM | 430°C for 2 hours |
| 6 | NM | 430°C for 2 hours |
| 2 | NM | 430°C for 2 hours |

*NM=Not Measured

Table IV reports heat treatment temperatures and times employed for developing silver halide particles in several of the glasses of Table II along with the elongation parameters applied to samples of those glasses via extrusion, including the maximum temperature and the maximum hydraulic pressure applied to cylindrical bars in the extrusion process. This pressure cannot be directly compared with the drawing stress of Table III since there is a stress gradient which decreases to 0 at the exit of the extrusion die. Again, electron microscopy was utilized to measure the average diameter of the particles and the average aspect ratio demonstrated by them. Table IV also lists the temperature and time of the reduction treatment to which the elongated specimens were subjected, a hydrogen atmosphere again constituting the reducing environment.

11

TABLE IV

| Example | Heat treatment | Particle size (nm) | Elongation conditions |
|---|---|---|---|
| 4 | 700°C for 10 hours | 67.0 | 610°C—227 MPa (33,000 psi) |
| 5 | 700°C for 10 hours | 73.0 | 610°C—227 MPa (33,000 psi) |

TABLE IV -Continued-

| Example | Aspect ratio | Reduction treatment |
|---|---|---|
| 4 | 7.2 | 455°C for 5.5 hours |
| 5 | 5.4 | 450°C for 4 hours |

The polarization character of the redrawn and extruded samples was examined subsequent to the hydrogen firing treatment employing a spectrophotometer equipped with a polarizer and rotatable sample holder. The wavelength at which maximum absorption was observed (the long wavelength or parallel peak), the transmittance of radiation polarized parallen ($T_{\parallel}$) and perpendicular ($T_{\perp}$) to the elongation axis, the dichroic ratio (DR) at that peak, and the polarization efficiency (PE) exhibited by the specimens are included in Table V. $PE = T_{\perp} - T_{\parallel} : T_{\perp} + T_{\parallel}$ Because good polarization can occur at wavelengths removed somewhat from that of the peak absorption, data are also included in Table V for longer wavelengths, viz., where $T_{\perp} = 0.01$ (1%) and 0.1 (10%).

TABLE V

| Example | Elongation | Wavelength | Maximum absorption | | | |
|---|---|---|---|---|---|---|
| | | | $T_{\perp}$ | $T_{\parallel}$ | DR | PE |
| 3 | Redrawn | 830 nm | 0.905 | <0.001 | >69 | >99.8 |
| 3 | Redrawn | 800 nm | 0.820 | <0.001 | >35 | >99.8 |
| 6 | Redrawn | 1100 nm | 0.915 | <0.001 | >78 | >99.8 |
| 6 | Redrawn | 1200 nm | 0.915 | <0.001 | >78 | >99.8 |
| 6 | Redrawn | 1400 nm | 0.920 | <0.001 | >83 | >99.8 |
| 6 | Redrawn | 1150 nm | 0.920 | 0.001 | >83 | >99.8 |
| 2 | Redrawn | 1250 nm | 0.925 | <0.001 | >89 | >99.8 |
| 4 | Extruded | 850 nm | 0.890 | <0.001 | >59 | >99.8 |
| 5 | Extruded | 850 nm | 0.825 | <0.001 | >36 | >99.8 |

TABLE V -Continued-

| Example | Elongation | Wavelength | $T_{||}=0.01\ T_{\perp}$ | PE |
|---|---|---|---|---|
| 3 | Redrawn | 1000 nm | 0.910 | 97.8 |
| 3 | Redrawn | 830 nm | 0.835 | 97.6 |
| 6 | Redrawn | 1250 nm | 0.920 | 97.9 |
| 6 | Redrawn | 1370 nm | 0.920 | 97.9 |
| 6 | Redrawn | 1530 nm | 0.925 | 97.9 |
| 6 | Redrawn | 1260 nm | 0.920 | 97.9 |
| 2 | Redrawn | 1400 nm | 0.925 | 97.9 |
| 4 | Extruded | 900 nm | 0.905 | 97.8 |
| 5 | Extruded | 950 nm | 0.880 | 97.8 |

TABLE V -Continued-

| Example | Elongation | Wavelength | $T_{||}=0.1\ T_{\perp}$ | PE |
|---|---|---|---|---|
| 3 | Redrawn | 1180 nm | 0.915 | 80.3 |
| 3 | Redrawn | 935 nm | 0.860 | 79.2 |
| 6 | Redrawn | 1390 nm | 0.920 | 80.4 |
| 6 | Redrawn | 1450 nm | 0.920 | 80.4 |
| 6 | Redrawn | 1665 nm | 0.920 | 80.4 |
| 6 | Redrawn | 1400 nm | 0.920 | 80.4 |
| 2 | Redrawn | 1530 nm | 0.925 | 80.5 |
| 4 | Extruded | 1025 nm | 0.935 | 80.6 |
| 5 | Extruded | 1055 nm | 0.895 | 79.9 |

As can be observed from Table V, the polarization characteristics of the elongated glasses are very excellent at the wavelength of maximum absorption and remain relatively good at wavelengths removed from that peak.

**Claims**

1. A method of making polarizing glasses from silver containing glasses of the types which are phase separable or photochromic through the presence of silver halide particles from the group of AgCl, AgBr, AgI, by elongating the glasses under stress at temperatures above the annealing point and aligning the glass phases or particles, respectively, in the direction of stress, and heat treating the elongated glasses in a reducing environment, in which method, to provide polarizing properties within the infrared region of the radiation spectrum, the glass is subjected prior to elongation to a temperature at least above the strain point, but not in excess of about 50°C above the softening point of the glass, for a sufficient length of time to cause the generation of silver halide particles therein selected from the group of AgCl, AgBr and AgI ranging in size from 20—500 nm (200 to 5000Å), the elongation under stress is done at a temperature above the annealing point, but below that where said glass exhibits a viscosity of $10^8$ poises, such that said silver halide particles are elongated to an aspect ratio of at least 5:1 and the heat treatment in reducing environment is done at a temperature above 250°C, but no higher than 25°C above the annealing point of the glass, for a sufficient length of time to reduce at least a portion of said silver halide particles to particles

13

which contain elemental silver and which have an aspect ratio of at least 2:1 (aspect ratio is here length-to-width ratio).

2. Method according to claim 1, wherein protection is provided for said glass during the stretching step at tensile stresses exceeding 13.8 MPa (2000 psi) by cladding said glass with a skin glass having a viscosity at the softening point temperature of the core glass which is at least 50% less than that of the core glass to form a laminated glass.

3. Method according to claim 1 or 2, wherein said glass or core glass, respectively, is photochromic and consists essentially, expressed in terms of weight percent on the oxide basis, of 6—20% $R_2O$, wherein $R_2O$ consists of 0—2.5% $Li_2O$, 0—9% $Na_2O$, 0—17 $K_2O\%$ and 0—6% $Cs_2O$, 14—23% $B_2O_3$, 5—25% $Al_2O_3$, 0—25% $P_2O_5$, 20—65% $SiO_2$, 0.004—0.02% CuO, 0.15—0.30% Ag, 0.1—0.25% Cl and 0.1—0.2% Br, the molar ratio $R_2O:B_2O_3$ ranging between about 0.55—0.85, where the composition is essentially free from divalent metal oxides other than CuO and the weight ratio Ag: (Cl+Br) ranging about 0.65—0.95.

4. Method according to claim 1 or 2 wherein said glass or core glass, respectively, does not display photochromic behavior and is essentially free from CuO.

5. Method according to claim 1 or 2, wherein the molar ratio $(R_2O—Al_2O_3):B_2O_3<0.25$ is such that said glass does not exhibit significant photochromic behavior.

6. Method according to claim 1 or 2 wherein said glass demonstrates photochromic behavior and contains at least 0.01% CdO.

7. Method according to claim 1 or 2 wherein said glass contains silver halide particles and copper, does not exhibit photochromic behavior and consists essentially, expressed in terms of weight percent on the oxide basis, of about 5—15% alkali metal oxides, 27—35% $B_2O_3$, 1—15% $Al_2O_3$ and the remainder $SiO_2$.

8. Method according to claim 2, or any one of claims 3 to 7 as dependent on claim 2, including the step of providing a core glass having silver-containing particles with diameters less than 50 mn (500Å).

9. Method according to claim 8, including the step of subjecting the drawn laminated polarizing glass to a reducing atmosphere at a temperature sufficient to reduce at least a portion of the silver halide particles to metallic silver and produce a relatively high dichroic ratio of at least 15:1.

10. Method according to claim 8 including the step of elongating said silver-containing particles with an aspect ratio sufficient to produce a dichroic ratio exceeding 60:1.

## Patentansprüche

1. Verfahren zur Herstellung polarisierender Gläser aus solchen silberhaltigen Gläsern, welche durch das Vorhandensein von Silberhalidteilchen aus der Gruppe AgCl, AgBr, AgI phasentrennbar oder photochrom sind, indem die Gläser unter Spannung bei Temperaturen oberhalb der oberen Kühltemperatur gedehnt und die Glasfasern bzw. Teilchen jeweils in Spannungsrichtung ausgerichtet werden, und indem die gedehnten Gläser in einer reduzierenden Umgebung wärmebehandelt werden, wobei bei dem Verfahren zum Schaffen polarisierender Eigenschaften innerhalb des Infrarotbereichs des Strahlungsspektrums das Glas vor dem Dehnen einer Temperatur wenigstens oberhalb der unteren Kühltemperatur, jedoch nicht in einem Übermaß von etwa 50°C oberhalb des Erweichungspunktes des Glases während einer ausreichend langen Zeit ausgesetzt wird, um die Bildung von Silberhalidteilchen darin, die aus der Gruppe aus AgCl, AgBr and AgI ausgewählt sind, welche in der Größe von 20—500 nm (200 bis 5000 Å) reichen, zu veranlassen, wobei die Dehnung unter Spannung bei einer Temperatur oberhalb der oberen Kühltemperatur, jedoch unterhalb der Temperatur, bei der das Glas eine Viskosität von $10^8$ Poises zeigt, derart ausgeführt wird, daß die Silberhalidteilchen in einem Aspektverhältnis von wenigstens 5:1 gedehnt werden, und wobei die Wärmebehandlung in einer reduzierenden Umgebung bei einer Temperatur oberhalb von 250°C, jedoch nicht höher als 25°C oberhalb der oberen Kühltemperatur des Glases während einer ausreichenden Zeitdauer durchgeführt wird, um wenigstens einen Teil der Silberhalidteilchen zu Teilchen reduzieren, welche elementares Silber enthalten und welche ein Aspektverhältnis von wenigstens 2:1 aufweisen (Aspektverhältnis bedeutet hier: das Verhältnis von Länge zu Breite).

2. Verfahren nach Anspruch 1, bei dem für das Glas während des Dehnungsschrittes bei 13,8 MPa (2000 psi) übersteigenden Zugbeanspruchungen ein Schutz durch Ummantelung des Glases mit einer Glashaut vorgesehen wird, die eine Viskosität bei der Erweichungspunkttemperatur des Kernglases besitzt, die wenigstens 50% geringer als die des Kernglases ist, um ein laminiertes Glas zu bilden.

3. Verfahren nach Anspruch 1 oder 2, bei dem jeweils das Glas bzw. Kernglas photochrom ist und im wesentlichen in Gew.-% auf Oxydbasis aus 6—20% $R_2O$ besteht, wobei $R_2O$ aus 0—2,5% $Li_2O$, 0—9% $Na_2O$, 0—17% $K_2O$ und 0—6% $Cs_2O$, 14—23% $B_2O_3$, 5—25% $Al_2O_3$, 0—25% $P_2O_5$, 20—65% $SiO_2$, 0,004—0,02% CuO, 0,15—0,30% Ag, 0,1—0,25% Cl und 0,1—0,2% Br besteht, wobei das Molarverhältnis $R_2O:B_2O_3$ zwischen etwa 0,55—0,85 rangiert, wobei die Zusammensetzung im wesentlichen frei von divalenten Metalloxyden außer CuO ist, und wobei das Gewichtsverhältnis Ag: (Cl+Br) etwa 0,65—0,95 beträgt.

4. Verfahren nach Anspruch 1 oder 2, bei dem jeweils das Glas bzw. das Kernglas kein photochromes Verhalten zeigt und im wesentlichen frei von CuO ist.

5. Verfahren nach Anspruch 1 oder 2, bei dem das Molarverhältnis $(R_2O—Al_2O_3):B_2O_3<0,25$ derart ist, daß das Glas kein signifikantes photochromes Verhalten zeigt.

6. Verfahren nach Anspruch 1 oder 2, bei dem das Glas photochromes Verhalten zeigt und wenigstens 0,01% CdO enthält.

7. Verfahren nach Anspruch 1 oder 2, bei dem das Glas Silberhalidteilchen und Kupfer enthält, kein photochromes Verhalten zeigt und im wesentlichen in Gew.-% auf Oxydbasis sich zusammensetzt aus etwa 5—15% Alkalimetalloxyden, 27—35% $B_2O_3$, 1—15% $Al_2O_3$ und dem Rest $SiO_2$.

8. Verfahren nach Anspruch 2 oder einem der Ansprüche 3—7 in Abhängigkeit vom Anspruch 2, mit dem Verfahrensschritt, daß ein Kernglas geschaffen wird, das silberhaltige Teilchen mit Durchmessern von weniger als 50 nm (500Å) aufweist.

9. Verfahren nach Anspruch 8, mit dem Verfahrensschritt, daß das gezogene laminierte polarisierende Glas einer reduzierenden Umgebung bei einer Temperatur ausgesetzt wird, die ausreicht, wenigstens einen Teil der Silberhalidteilchen zu metallischem Silber zu reduzieren und ein relativ hohes dichroitisches Verhältnis von wenigstens 15:1 zu erzeugen.

10. Verfahren nach Anspruch 8, mit dem Verfahrensschritt, daß die silberhaltigen Teilchen mit einem Aspektverhältnis gedehnt werden, welches ausreicht, ein 60:1 übersteigendes dichroitisches Verhältnis zu erzeugen.

**Revendications**

1. Un procédé de production de verres polarisants à partir de verres contenant de l'argent des types à séparabilité de phases ou photochromiques grâce à la présence de particules d'halogénure(s) d'argent choisies dans le groupe formé par AgCl, AgBr, AgI, par allongement des verres sous contrainte à des températures supérieures au point de recuisson et alignement des phases ou des particules du verre, respectivement, dans la direction de contrainte, et par traitement thermique des verres allongés dans une ambiance réductrice, procédé dans lequel, pour obtenir des propriétés polarisantes dans la région infrarouge du spectre de rayonnement, le verre est soumis avant allongement à une température au moins supérieure au point de tension mais ne dépassant pas de plus d'environ 50°C le point de ramollissement du verre, pendant un temps suffisant pour donner naissance au sein de celui-ci à des particules d'halogénure d'argent choisies dans le groupe d'AgCl, AgBr et AgI dont la grosseur se situe de 20 à 500 nm (200 à 5000 Å), l'allongement sous contrainte est opéré à une température supérieure au point de recuisson mais inférieure à celle à laquelle le verre présente une viscosité de $10^8$ poises, en sorte que lesdites particules d'halogénure d'argent prennent par allongement un rapport d'aspect d'au moins 5/1, et le traitement thermique en ambiance réductrice est opéré à une température supérieure à 250°C, mais ne dépassant pas de plus de 25°C le point de recuisson du verre, pendant un temps suffisant pour réduire au moins une partie desdites particules d'halogénure d'argent en des particules qui contiennent de l'argen élémentaire et qui présentent un rapport d'aspect d'au moins 2/1 (le rapport d'aspect étant ici le rapport de la longueur à la largeur).

2. Procédé selon la revendication 1, dans lequel une protection est apportée audit verre pendant l'opération d'allongement sous des contraintes de traction dépassant 13,8 MPa (2000 psi) par gainage dudit verre avec un verre de peau dont la viscosité au point de ramollissement du verre d'âme est d'au moins 50% inférieure à celle du verre d'âme pour former un verre stratifié.

3. Procédé selon la revendication 1 ou 2, dans lequel ledit verre ou verre d'âme, respectivement, est photochromique et est essentiellement constitué, en pourcentages pondéraux sur la base des oxydes, de 6 à 20% de $R_2O$, $R_2O$ étant formé de 0 à 2,5 de $Li_2O$, 0 à 9% de $Na_2O$, 0 à 17% de $K_2O$ et 0 à 6% de $Cs_2O$, de 14 à 23% de $B_2O_3$, de 5 à 25% d'$Al_2O_3$, de 0 à 25% de $P_2O_5$, de 20 à 65% de $SiO_2$, de 0,004 à 0,02% de CuO, de 0,15 à 0,30% d'Ag, de 0,1 à 0,25% de Cl et de 0,1 à 0,2% de Br, le rapport molaire $R_2O/B_2O_3$ étant compris entre environ 0,55 et 0,85, la composition étant essentiellement dépourvue d'oxydes de métaux divalents autres que CuO et le rapport pondéral Ag/(Cl+Br) allant d'environ 0,65 à 0,95.

4. Procédé selon la revendication 1 ou 2, dans lequel ledit verre ou verre d'âme, respectivement, ne présente pas de comportement photochromique et est essentiellement dépourvu de CuO.

5. Procédé selon la revendication 1 ou 2, dans lequel le rapport molaire $(R_2O—Al_2O_3)/B_2O_3<0,25$ est tel que ledit verre ne présente pas de comportement photochromique notable.

6. Procédé selon la revendication 1 ou 2, dans lequel ledit verre manifeste un effet photochromique et contient au moins 0,01% de CdO.

7. Procédé selon la revendication 1 ou 2, dans lequel ledit verre contient des particules d'halogénure(s) d'argent et du cuivre, ne présente pas de comportement photochromique et est essentiellement constitué, en pourcentages pondéraux sur la base des oxydes, d'environ 5 à 15% d'oxydes de métaux alcalins, 27 à 35% de $B_2O_3$, 1 à 15% d'$Al_2O_3$ et de $SiO_2$ pour le restant.

8. Procédé selon la revendication 2, ou selon l'une quelconque des revendications 3 à 7 rattachées à la revendication 2, incluant l'opération consistant à prendre un verre d'âme à particules contenant de l'argent dont les diamètres sont inférieurs à 50 nm (500 Å).

9. Procédé selon la revendication 8, incluant l'opération consistant à soumettre le verre polarisant stratifié et étiré à une atmosphère réductrice à une température suffisante pour réduire au moins une partie des particules d'halogénure d'argent en argent métallique et à fournir un rapport de dichroïsme relativement élevé d'au moins 15/1.

10. Procédé selon la revendication 8, incluant l'opération consistant à allonger lesdites particules contenant de l'argent avec un rapport d'aspect suffisant pour fournir un rapport de dichroïsme supérieur à 60/1.

*Fig. 2*

STRAIN POINT

ANNEALING POINT

$C_1$

$S_1$

$S_2$

SOFTENING POINT

VISCOSITY (poises)

$10^{15}$   $10^{14}$   $10^{13}$   $10^{12}$   $10^{11}$   $10^{10}$   $10^{9}$   $10^{8}$   $10^{7}$

TEMP. °C

425   500   600   700

*Fig. 1*

10

12

14

16

18

20